Europäisches Patentamt

European Patent Office

Office européen des brevets

(19)

(11) **EP 1 048 335 B1**

(12) **EUROPÄISCHE PATENTSCHRIFT**

| | |
|---|---|
| (45) Veröffentlichungstag und Bekanntmachung des Hinweises auf die Patenterteilung:<br>**13.04.2005 Patentblatt 2005/15** | (51) Int Cl.⁷: **B01D 39/16**, A47L 9/14 |

(21) Anmeldenummer: **00108098.5**

(22) Anmeldetag: **26.04.2000**

(54) **Staubfilterbeutel, enthaltend Nanofaservlies**

Dust filter bag containing nonwoven nanofiber fabric

Sac filtrant à poussière contenant non tissé à nanofibres

(84) Benannte Vertragsstaaten:
**AT BE CH CY DE DK ES FI FR GB GR IE IT LI LU MC NL PT SE**

(30) Priorität: **30.04.1999 DE 19919809**

(43) Veröffentlichungstag der Anmeldung:
**02.11.2000 Patentblatt 2000/44**

(73) Patentinhaber: **FiberMark Gessner GmbH & Co.**
**83052 Bruckmühl (DE)**

(72) Erfinder:
- **Emig, Dietmar**
  **83229 Aschau (DE)**
- **Klimmek, Albrecht**
  **83052 Bruckmühl (DE)**

- **Raabe, Ernst**
  **83064 Raubling (DE)**

(74) Vertreter: **HOFFMANN - EITLE**
**Patent- und Rechtsanwälte**
**Arabellastrasse 4**
**81925 München (DE)**

(56) Entgegenhaltungen:
**EP-A- 0 338 479        EP-A- 0 410 733**
**US-A- 4 650 506**

- **PATENT ABSTRACTS OF JAPAN vol. 013, no. 328 (C-621), 24. Juli 1989 (1989-07-24) & JP 01 107821 A (KURARAY CO LTD), 25. April 1989 (1989-04-25)**

**Beschreibung**

Die Erfindung betrifft einen Staubfilterbeutel, der mindestens eine Faservlieslage und mindestens eine Trägermateriallage umfaßt.

Die Anforderungen an die Filterleistungen der in den modernen Staubsaugern eingesetzten Filterbeutel wurden in den letzten Jahren deutlich gesteigert. Hier wird vor allem dem Bereich der Feinpartikelabscheidung immer größere Bedeutung beigemessen, da dies nicht nur dem gestiegenen Hygienebewußtsein entspricht, sondern, - vor dem Hintergrund der ständig zunehmenden Zahl von Allergikern und hier insbesondere der Hausstauballergiker - die Staubsaugerausblasluft möglichst allergenträgerarm sein soll. Um das Ziel der Verbesserung der Feinpartikelabscheidung zu erreichen, wurden in den letzten Jahren vielfältige Anstrengungen unternommen, die auf die Entwicklung neuer Materialien, Beutelkonstruktionen und Filtersysteme gerichtet waren. Beispielsweise wurden dreilagige Filterbeutel hergestellt oder aber es wurden nachgeschaltete Feinpartikel-Filterelemente als Ausblasfilter verwendet. Die Nachteile dieser Versionen sind entweder in der ungenügenden Verbesserung der Feinpartikelabscheidung oder in einer starken Erhöhung des Filterwiderstandes, der zu einer reduzierten Saugleistung der Geräte führt, zu sehen.

Ein großer Fortschritt bei der Verbesserung der Feinpartikelabscheidung war vor einigen Jahren die Entwicklung der Meltblown-Feinfaservliese und deren Verwendung in speziellen Staubsaugerbeuteln. Diese Feinfaserkomponenten ermöglichen eine deutliche Entlastung der Hausstauballergiker durch eine reinere Ausblasluft des Staubsaugers. So werden heute in den Vereinigten Staaten bereits etwa 25 % der Staubfilterbeutel mit einer Meltblownfaserlage hergestellt, mit zunehmender Tendenz. Der grundsätzliche Aufbau derartiger Beutel ist in den Patenten DE 38 12 849, US 5,080,702 und US 4,589,894 enthalten. Wie in DE 38 12 849 offenbart, haben solche Meltblownfaserlagen typischerweise einen Faserdurchmesser von 0,5 bis 18 $\mu$m, ein Flächengewicht von 10 bis 50 g/m$^2$ und eine Luftdurchlässigkeit von 200 bis 1500 l/m$^2\times$s. Aus heutiger Sicht haben diese Staubfilterbeutel jedoch einen Nachteil: Obwohl eine hohe Filterabscheideleistung erreicht wird, sind dieser Technologie insofern Grenzen gesetzt, als weiter verbesserte Feinstpartikelabscheidung zwangsläufig eine Erhöhung des Flächengewichts der Feinpartikelfilterschicht erforderlich macht, was gleichzeitig den Filterwiderstand und damit die Saugleistung der Geräte stark negativ beeinflußt. Diese negativen Effekte nehmen in gleichem Maße zu wie die Feinstpartikelabscheidung verbessert wird. Außerdem wird durch die Erhöhung des Flächengewichts der Meltblownlage zur Verbesserung der Feinstpartikelabscheidung die Verarbeitung dieser Filterkombinationen erschwert, da die Meltblownlage bedingt durch ihren Aufbau starke Rückstellkräfte besitzt, die das Falzen des Filterlaminats zu einem flach liegenden Staubfilterbeutel, besonders im Bereich des den Beutel verschließenden Wickelbodens erschwert.

Eine andere Technologie, die vor allem in Europa aufgrund der andersgearteten Konstruktionsmerkmale der europäischen Staubsauger zum Einsatz kommt, beinhaltet das Konzept der Mikroabluftfilter, die dem Staubfilterbeutel abluftseitig nachgeschaltet sind. Hochwertige Abluftfilter bestehen mittlerweile aus Kassettenkonstruktionen mit plissierten Filterelementen. Der technische Nachteil dieser kostenaufwendigen Versionen liegt ebenfalls in einem im Vergleich zu Systemen ohne Mikroabluftfilter erhöhten Filterwiderstand für das gesamte Filtersystem aus Filterbeutel und Abluftfilter, wodurch auch hier die Saugleistung der Geräte stark beeinträchtigt wird. Dazu kommt, daß aufgrund des Staubdurchlaßgrads der Filterbeutel der Verstofpungsgrad des nachgeschalteten Abluftfilters mit zunehmender Betriebsdauer steigt, wodurch eine zusätzliche Beeinträchtigung der Gerätesaugleistung entsteht. Um diese Nachteile auszuschließen, wurden bisher mannigfaltige Versuche unternommen, die Abscheideleistung des Filtersystems vor allem für Feinpartikel auf dem erreichten hohen Niveau einzustellen und gleichzeitig die Beeinträchtigung der Saugleistung deutlich zu reduzieren, jedoch bislang ohne den gewünschten Erfolg.

Das Dokument EP-A-0338479 beschreibt Filter die eine Lage aus Feinfasern mit einem Flächengewicht von 10-50 g/m2 aufweisen.

Der Erfindung liegt die Aufgabe zugrunde, einen Staubfilterbeutel mit besonders gutem Staubabscheidegrad für Feinstpartikel unter 0,5 $\mu$m Größe herzustellen, der gleichzeitig einen geringen Anfangsfilterwiderstand und eine geringe Verstopfungsneigung besitzt, wodurch eine hohe Saugleistung des Staubsaugers, auch bei zunehmender Befüllung des Staubfilterbeutels während der Anwendung erhalten bleibt

Die Aufgabe wird erfindungsgemäß durch einen Staubfilterbeutel gelöst, der mindestens eine Trägermateriallage und mindestens eine Faservlieslage umfaßt, wobei die mindestens eine Faservlieslage eine Nanofaservlieslage mit einem durchschnittlichen Faserdurchmesser von 10 bis 1000 nm, vorzugsweise von 50 bis 500 nm, einem Flächengewicht nach ISO 536 von 0,05 bis 2 g/m$^2$, vorzugsweise von 0,1 bis 0,5 g/m$^2$, und einer Luftdurchlässigkeit nach ISO 9237 von 1500 bis 20000 l/m$^2\times$s, vorzugsweise von 2000 bis 10000 l/m$^2\times$s, ist, und die mindestens eine Trägermateriallage eine Luftdurchlässigkeit nach ISO 9237 von mehr als 70 l/m$^2\times$s, vorzugsweise von 200 bis 900 l/m$^2$xs, einen Bruchwiderstand nach ISO 1924-2 in Längsrichtung von mehr als 20 N/15 mm Streifenbreite, vorzugsweise von mehr als 35 N/15 mm Streifenbreite, und in

Querrichtung von mehr 10 N/15 mm Streifenbreite, vorzugsweise von mehr als 18 N/15 mm Streifenbreite, aufweist.

Der verwendete Begriff "Nanofasern" macht deutlich, daß die Fasern einen Durchmesser im Nanometerbereich, speziell von 10 bis 1000 nm, vorzugsweise von 50 bis 500 nm haben.

Die erfindungsgemäß eingesetzten Nanofaservliese bestehen herstellungsbedingt üblicherweise aus in Wasser löslichen, in einem organischen Lösungsmittel löslichen oder thermoplastischen Polymeren.

Besonders bevorzugte in Wasser lösliche Polymere sind Polyvinylalkohol, Polyvinylpyrrolidon, Polyethylenoxid oder Copolymere davon, Cellulose, Methylcellulose, Propylcellulose, Stärke oder Mischungen hiervon.

Besonders bevorzugte in einem organischen Lösungsmittel lösliche Polymere sind Polystyrol, Polycarbonat, Polyamid, Polyurethan, Polyacrylat, Polymethacrylat, Polyvinylacetat, Polyvinylacetal, Polyvinylether, Celluloseacetat oder Copolymere oder Mischungen davon.

Besonders bevorzugte thermoplastische Polymere sind Polyethylen, Polypropylen, Polybuten-1, Polymethylpenten, Polychlortrifluorethylen, Polyamid, Polyester, Polycarbonat, Polysulfon, Polyethersulfon, Polyphenylensulfid, Polyacrylnitril, Polyvinylchlorid, Polystyrol, Polyaryletherketon, Polyvinylidenfluorid, Polyoxymethylen, Polyurethan oder Copolymere oder Mischungen davon.

Das Nanofaservlies, das die entscheidende Komponente für einen hohen Abscheidegrad von Feinstäuben darstellt, wird vorzugsweise erzeugt, indem ein thermoplastisches Polymer in geschmolzenem Zustand oder ein in einem geeigneten Lösungsmittel gelöstes Polymer aus Düsen in einem starken elektrischen Feld zu feinsten Fasern versponnen wird und auf einer Unterlage, die über eine Gegenelektrode geführt wird, in Form eines Flächengebildes abgeschieden wird. Dieses Verfahren ist als Elektrospinning-Verfahren bekannt. Der Faserdurchmesser kann durch die Prozeßparameter, nämlich die Viskosität der Schmelze bei Thermoplasten bzw. Konzentration und Viskosität der Polymerlösung gesteuert werden. Die Flächengewichte des Nanofaservlieses werden zum einen durch den Massenfluß durch die Düsen und zum anderen durch die Geschwindigkeit, mit der die Unterlage unter den Düsen bewegt wird, bestimmt. Die Luftdurchlässigkeit des Nanofaservlieses wird durch die Dicke der Fasern und deren Packungsdichte beeinflußt.

Die Erzeugung von Nanofasern aus verschiedenen Polymeren wird von Darell H. Reneker and Iksoo Chun in der Veröffentlichung "Nanometre diameter fibres of polymer, produced by electrospinning", Nanotechnology 7, 1996, S. 216 - 223, beschrieben.

Da das erfindungsgemäß verwendete Nanofaservlies aufgrund seines sehr geringen Flächengewichts eine geringe Festigkeit besitzt und eine Weiterverarbeitung als selbsttragendes Flächengebilde schwierig sein kann, wird es bevorzugt direkt bei seiner Erzeugung auf der Trägermateriallage und/oder einem zusätzlichen Stützelement des Staubfilterbeutels unter Bildung eines zweilagigen Verbundes abgeschieden.

In einer bevorzugten Ausführungsform der erfindungsgemäßen Staubfilterbeutel besteht die Trägermateriallage aus einem Spinnvlies. Vorzugsweise hat das Spinnvlies ein Flächengewicht (ISO 536) von 15 bis 100 g/m$^2$, besonders bevorzugt 20 bis 40 g/m$^2$. Weiterhin ist es auch vorteilhaft, wenn das Spinnvlies eine Luftdurchlässigkeit (ISO 9237) von 100 bis 8000 l/m$^2$xs, besonders bevorzugt 1000 bis 3000 l/m$^2$×s aufweist. Vorzugsweise bestehen die verwendeten Spinnvliese aus Polyethylen, Polypropylen, Polyester, Polyamid oder Copolymeren davon.

Die obigen physikalischen Eigenschaften des Spinnvlieses lassen sich während des Herstellungsverfahrens des Spinnvlieses einstellen, bei dem ein thermoplastisches Polymer in einem Extruder aufgeschmolzen wird und durch eine Spinndüse gedrückt wird, und die in den Kapillaren der Spinndüse gebildeten Endlosfilamente verstreckt und auf einem Sieb zu einem Flächengebilde abgelegt werden. Das Flächengewicht des Spinnvlieses kann über den Polymerausstoß der Spinndüse und die Geschwindigkeit des Ablagesiebes eingestellt werden. Die Luftdurchlässigkeit des Spinnvlieses ist abhängig von der Packungsdichte, die im wesentlichen über die Filamentdicke gesteuert wird. Die Einstellung der Filamentdurchmesser erfolgt über die Verstreckung der Schmelzefäden, die über die Temperaturführung und Abzugsgeschwindigkeit beim Spinnen gesteuert wird. Der Bruchwiderstand des Spinnvlieses wird durch die gewählten Materialien für die Herstellung des Spinnvlieses bestimmt. Gegebenenfalls kann der Bruchwiderstand durch eine partielle Kalandrierung oder Ultraschallverschweißung unter Bildung von Punkt- bzw. Gittermustern erhöht werden. Hierbei werden die Filamente an den Kreuzungspunkten miteinander verschmolzen. Auch über eine vollflächige Verdichtung mittels eines Kalanders können die Spinnvliese weiter verfestigt werden.

In einer weiteren bevorzugten Ausführungsform wird als Trägermateriallage in den erfindungsgemäßen Staubfilterbeuteln Filterpapier eingesetzt. Bevorzugt ist dabei Filterpapier mit einem Flächengewicht (ISO 536) von 40 bis 90 g/m$^2$, besonders bevorzugt von 42 bis 60 g/m$^2$. Vorteilhaft sind auch Filterpapiere mit einer Luftdurchlässigkeit (ISO 9237) zwischen 70 und 900 l/m$^2$×s, besonders bevorzugt zwischen 120 und 400 l/m$^2$xs. Desweiteren ist ebenfalls ein Filterpapier mit einem Bruchwiderstand (ISO 1924-2) in Längsrichtung von 25 bis 70 N/15 mm Streifenbreite und in Querrichtung von 15 bis 45 N/15 mm Streifenbreite vorteilhaft. Für die Verwendung als Trägermateriallage besonders geeignete Filterpapiere bestehen aus:

- lang- und kurzfaserigen Zellstoffen oder
- Mischungen lang- und kurzfaseriger Zellstoffe mit Synthesefasern oder
- Mischungen lang- und kurzfaseriger Zellstoffe mit Glasfasern oder
- Mischungen der lang- und kurzfaserigen Zellstoffe mit Synthesefasern und Glasfasern.

Die obigen physikalischen Parameter des Filterpapiers können während der Papierherstellung eingestellt werden. Bei der Papierherstellung werden üblicherweise die eingesetzten Fasern in Wasser dispergiert, dann mittels eines Siebes vom Wasser separiert, und dabei wird gleichzeitig ein Flächengebilde erzeugt. Die gebildete nasse Papierbahn wird anschließend getrocknet. Das Flächengewicht des Filterpapiers läßt sich über die Dosiermenge der Fasern und die Papiermaschinengeschwindigkeit einstellen. Die Luftdurchlässigkeit des Filterpapiers wird durch die Packungsdichte bestimmt, die über die unterschiedlichen Faserdurchmesser der verwendeten Zellstoffe, Synthesefasern bzw. Glasfasern sowie über das Mischungsverhältnis der verschiedenen Fasertypen gesteuert werden kann. Einfluß auf die Luftdurchlässigkeit hat auch das Flächengewicht, d.h. ein steigendes Flächengewicht reduziert die Luftdurchlässigkeit. Der Bruchwiderstand des Filterpapiers kann durch Fibrillieren, sogenanntes Mahlen, der Zellstoffe und durch das Einbringen von Bindemitteln gesteuert werden. Hierbei kann das Bindemittel auf die Papierbahn imprägniert oder aufgesprüht werden. Anschließend wird das Löse- oder Verdünnungsmittel des Binders, in den meisten Fällen Wasser, verdampft und die Papierbahn wieder getrocknet. Die Bindemittel können auch in die Papiermasse eingesetzt werden, d.h., die Verfestigungsmittel werden den dispergierten Fasern zugesetzt und an der Faseroberfläche fixiert, bevor die Blattbildung auf dem Papiermaschinensieb erfolgt und die Bahn anschließend wie üblich getrocknet wird. Eine weitere Möglichkeit ist das Aufsprühen des Bindemittels in gelöster oder dispergierter Form auf die nasse Papierbahn, bevor die Bahn getrocknet wird.

In einer bevorzugten Ausführungsform der erfindungsgemäßen Staubfilterbeutel ist das Stützelement ein Vlies.

Als Stützelement geeignete Vliese können z.B. trockengelegte Vliese, naßgelegte Vliese oder Spinnvliese sein, die aus Zellstoff, Synthesefasern und/oder -filamenten oder Mischungen davon aufgebaut sein können.

Eine weitere bevorzugte Ausführungsform der Staubfilterbeutel beinhaltet Meltblownvliese als Stützelement, die aus einem thermoplastischen Material, vorzugsweise aus Polyolefin, Polyamid, Polyester, Polycarbonat oder Copolymeren oder Mischungen davon, aufgebaut sein können.

Die Meltblownvliese bestehen im allgemeinen aus langen, feinen Fasern uneinheitlichen Durchmessers und können in einem Schmelzblasverfahren (z. B. Exxon-Verfahren) hergestellt werden. Dabei wird das thermoplastische Material in einem Extruder aufgeschmolzen, mit einer Spinnpumpe durch die Kapillaren der Meltblownspinndüse gefördert und beim Austritt mit heißer Luft verstreckt und auf einem Kollektorsieb bahnförmig abgelegt.

In einer bevorzugten Ausführungsform ist das Stützelement ein trockengelegtes Vlies mit einem Flächengewicht (ISO 536) von 10 bis 50 g/m$^2$, vorzugsweise 20 bis 30 g/m$^2$, einer Dicke (ISO 534) von 0,10 bis 2,0 mm, vorzugsweise 0,20 bis 1,0 mm, einer Luftdurchlässigkeit (ISO 9237) von 700 bis 12000 l/m$^2\times$s, vorzugsweise 1200 bis 5000 l/m$^2$xs, und einem Bruchwiderstand (ISO 1924-2) in Längsrichtung von mehr als 5 N/15 mm Streifenbreite und in Querrichtung von mehr als 1 N/15 mm Streifenbreite.

Die oben genannten physikalischen Eigenschaften lassen sich bei der Herstellung der trockengelegten Vliese einstellen. Das Flächengewicht kann über die Anzahl bzw. Menge der Fasern und die Geschwindigkeit des Ablageaggregats gesteuert werden. Die Luftdurchlässigkeit kann über den Durchmesser der Fasern, die Art der Fasern, glatt oder gekräuselt, durch das Mischen von verschiedenen Fasertypen und über die Packungsdichte eingestellt werden. Die Packungsdichte wird hierbei über den Ablegeprozeß und über die weitere Behandlung der Bahn, z.B. durch Verdichten durch Nadelung, mechanisches Pressen zwischen Walzen, eingestellt. Für die Einstellung des Bruchwiderstandes eignet sich ein Besprühen oder Imprägnieren der Fasern mit Bindemitteln. Auch ein Thermobonding über bei der Erzeugung eingebrachte thermoplastische Fasern mit anschließender Wärmebehandlung der Bahn ist für die Einstellung des Bruchwiderstandes geeignet.

Gemäß einer anderen vorteilhaften Ausführungsform ist das Stützelement ein naßgelegtes Vlies mit einem Flächengewicht (ISO 536) von 6 bis 40 g/m$^2$, vorzugsweise 10 bis 20 g/m$^2$, einer Dicke (ISO 534) von 0,05 bis 0,35 mm, vorzugsweise 0,08 bis 0,25 mm, einer Luftdurchlässigkeit (ISO 9237) von 500 bis 4000 l/m$^2\times$s, vorzugsweise 700 bis 2000 l/m$^2\times$s, und einem Bruchwiderstand (ISO 1924-2) in Längsrichtung von mehr als 5 N/15 mm Streifenbreite und in Querrichtung von mehr als 2 N/15 mm Streifenbreite.

Naßgelegte Vliese werden in der gleichen Art wie die oben beschriebenen Filterpapiere erzeugt. In gleicher Weise wie bei den Filterpapieren lassen sich auch die physikalischen Parameter naßgelegter Vliese einstellen.

Auch ein Spinnvlies als Stützelement mit einem Flächengewicht (ISO 536) von 8 bis 40 g/m$^2$, vorzugsweise 13 bis 25 g/m$^2$, einer Dicke (ISO 534) von 0,05 bis 0,30 mm, vorzugsweise 0,07 bis 0,20 mm, einer Luftdurchlässigkeit (ISO 9237) von 700 bis 12000 l/m$^2$xs, vorzugsweise 1200 bis 5000 l/m$^2\times$s, und einem Bruchwiderstand (ISO 1924-2) in Längsrichtung von mehr als 7 N/15 mm Streifenbreite und in Querrichtung von mehr als 3 N/15 mm Streifenbreite kann als besonders geeignet angesehen werden.

Schließlich besteht eine weitere bevorzugte Ausgestaltung des Stützelements in einem Meltblownvlies mit einem Flächengewicht (ISO 536) von 6 bis 60 g/m$^2$, vorzugsweise 10 bis 25 g/m$^2$, einer Dicke (ISO 534) von 0,06 bis 0,50 mm, vorzugsweise 0,23 bis 0,35 mm, einer Luftdurchlässigkeit (ISO 9237) von 300 bis 2000 l/m$^2\times$s, vorzugsweise 500 bis 1200 l/m$^2\times$s, und einem Bruchwiderstand (ISO 1924-2) in Längsrichtung von mehr als 2 N/15 mm Streifenbreite und in Querrichtung von mehr als 1 N/15 mm Streifenbreite.

Die obigen Produktmerkmale der Meltblownvliese lassen sich während deren Herstellung wie folgt einstellen. Das Flächengewicht wird über den Polymerausstoß und die Geschwindigkeit des Ablegesiebes gesteuert. Die Luftdurchlässigkeit ergibt sich aus der Packungsdichte der Fasern, die wiederum über den Faserdurchmesser und die Aufprallenergie der Fasern auf dem Ablagesieb gesteuert wird. Die Dicke des Meltblownvlieses wird über den Faserdurchmesser eingestellt, der über das Verhältnis Polymergeschwindigkeit beim Austritt aus den Kapillaren und der Luftgeschwindigkeit der Blasluft und dem daraus resultierenden Verstreckungsgrad der Filamente gesteuert wird. Auch über die Temperaturen der Polymerschmelze und der Blasluft kann der Verstreckungsgrad der Filamente und damit der Faserdurchmesser, die Packungsdichte und die Luftdurchlässigkeit des Vlieses beeinflußt werden. Die Aufprallenergie der Fasern auf das Ablagesieb ist über die Blasluftgeschwindigkeit und den Abstand zwischen Meltblowndüse und Ablagesieb steuerbar. Zur Beeinflussung des Bruchwiderstandes können die Fasern partiell, z.B. in Form eines Punkt- oder Gittermusters, verschweißt werden. Weiterhin ist es auch möglich, Bindemittel durch Imprägnieren oder Besprühen zur Festigkeitssteigerung einzuführen.

In einer bestimmten Ausführungsform werden ausschließlich solche Lagen für den Aufbau des erfindungsgemäßen Staubfilterbeutels verwendet, die aus wasserunlöslichen Materialien bestehen. Materialien, die unter Wassereinwirkung quellen, können hierbei auch eingesetzt werden, sofern beim Quellen ihre Träger-, Stütz- und/oder Filterfunktion nicht verlorengeht. Staubfilterbeutel, die ausschließlich aus wasserunlöslichen Materialien bestehen, sind für die Naß- und Trockenanwendung gleichermaßen geeignet.

In einer bevorzugten Ausführungsform der Staubfilterbeutel ist die Trägermateriallage die Außenseite und das Stützelement die innenliegende Anströmseite des Staubfilterbeutels, wobei die auf dem Stützelement unter Bildung eines zweilagigen Verbundes abgeschiedene Nanofaservlieslage der Trägermateriallage zugewandt ist.

In einer anderen Ausgestaltung der erfindungsgemäßen Staubfilterbeutel ist die Trägermateriallage die Außenseite und das Stützelement die innenliegende Anströmseite des Staubfilterbeutels, wobei die auf dem Stützelement unter Bildung eines zweilagigen Verbundes abgeschiedene Nanofaservlieslage der Trägermateriallage abgewandt ist.

Gemäß einer weiteren erfindungsgemäßen Ausführungsform der Staubfilterbeutel ist die Trägermateriallage die Außenseite und das Stützelement die innenliegende Anströmseite des Staubfilterbeutels, wobei sowohl auf der Trägermateriallage als auch auf dem Stützelement jeweils eine Lage Nanofaservlies unter Bildung eines zweilagigen Verbundes abgeschieden ist.

Hierbei kann der Staubfilterbeutel so ausgestaltet sein, daß die auf dem Stützelement abgeschiedene Nanofaservlieslage der Trägermateriallage abgewandt ist und die auf der Trägermateriallage abgeschiedene Nanofaservlieslage dem Stützelement zugewandt ist.

Weiterhin kann der Staubfilterbeutel hierbei auch so konstruiert sein, daß die auf dem Stützelement abgeschiedene Nanofaservlieslage der Trägermateriallage abgewandt ist und die auf der Trägermateriallage abgeschiedene Nanofaservlieslage dem Stützelement abgewandt ist.

Bevorzugt sind hierbei auch solche Staubfilterbeutel, in denen die auf dem Stützelement abgeschiedene Nanofaservlieslage der Trägermateriallage zugewandt ist und die auf der Trägermateriallage abgeschiedene Nanofaservlieslage dem Stützelement zugewandt ist.

Weiterhin geeignet sind hierbei auch solche Staubfilterbeutel, in denen die auf dem Stützelement abgeschiedene Nanofaservlieslage der Trägermateriallage zugewandt ist und die auf der Trägermateriallage abgeschiedene Nanofaservlieslage dem Stützelement abgewandt ist.

Schließlich ist eine weitere bevorzugte Ausgestaltung des erfindungsgemäßen Staubfilterbeutels dadurch gegeben, daß die Trägermateriallage die Außenseite und das Stützelement die innenliegende Anströmseite des Staubfilterbeutels bilden, wobei sowohl auf beiden Seiten der Trägermateriallage als auch auf beiden Seiten des Stützelements jeweils eine Lage Nanofaservlies unter jeweiliger Bildung eines dreilagigen Verbundes abgeschieden ist.

Nachfolgend sind die bevorzugten Lagenanordnungen im einzelnen nochmals aufgeführt.

Anströmseite (innen)          →          → Abluftseite (außen)

- Stützelement/Nanofaservlies → Träger
- Nanofaservlies/Stützelement → Träger
- Nanofaservlies/Stützelement → Nanofaservlies/Träger
- Nanofaservlies/Stützelement → Träger/Nanofaservlies
- Stützelement/Nanofaservlies → Nanofaservlies/Träger
- Stützelement/Nanofaservlies → Träger/Nanofaservlies
- Nanofaservlies/Stützelement/Nanofaservlies →
  Nanofaservlies/Träger/Nanofaservlies

In obiger Liste sind die einzelnen Lagen in der Reihenfolge von der Anströmseite aufgeführt. Die Pfeile symbolisieren folglich die Strömungsrichtung der Luft.

Zur Herstellung von Roh- und Fertigbeuteln aus den erfindungsgemäßen Filterzusammensetzungen können an sich bekannte Verfahren verwendet werden.

Diese Herstellungsverfahren umfassen meist zwei Arbeitsgänge, die auf separaten Maschinenaggregaten erfolgen:

a) Fertigung des Rohbeutels
b) Konfektionierung zum Fertigbeutel.

Für die Rohbeutelfertigung wird die Lage oder der zweilagige Verbund, welche im Staubfilterbeutel die Außenlage bilden sollen, in Rollenform der Beutelmaschine vorgelegt. Von einer Abwickelstation wird diese Bahn unter Anlegung einer gleichbleibenden Zugspannung in die Maschine eingezogen und zu einem Schlauch gebildet, der mit einer Längsnaht verschlossen wird. Anschließend wird der Schlauch auf die entsprechende Länge geschnitten und eines der Schlauchenden zu einem Boden verschlossen. Dies geschieht auf der Bodenfalztrommel durch Ausbildung einer Lasche, die umgeschlagen und aufeinandergeklebt wird. Die Rohbeutelmaschine ist mit einer Fütterungseinrichtung für die Lagen versehen, die im Staubfilterbeutel innen zu liegen kommen sollen. Die Bahnen dieser Lagen werden der ablaufenden Bahn der Außenlage vor der Schlauchbildung zugeführt. Man erhält somit Beutel im Beutel. Der so erhaltene Rohbeutel wird auf einer separaten Konfektioniermaschine mit einer für das vorgesehene Staubsaugermodell entsprechenden Halteplatte versehen und zwar meist auf dem vorher ausgebildeten Laschenboden (Fachausdruck = Blockboden). Das noch offene zweite Schlauchende wird in Form eines Wickelbodens durch Umschlagen und Verkleben des Schlauches verschlossen.

Erfindungsgemäße Staubfilterbeutel können zur effektiven Abscheidung von Feinststäuben in den verschiedensten Staubsaugern eingesetzt werden, wobei die Saugleistung gegenüber herkömmlichen Geräten nicht reduziert ist. Hinsichtlich Größe und Form der Filterbeutel gibt es keine Einschränkungen. Sie eignen sich daher für Industrie-, Boden- und Handstaubsauger. Ein Schwerpunkt dürfte die effektive Entfernung von allergenem Hausstaub sein.

**Beschreibung der Prüfmethoden**

Nachfolgend sind die Charakterisierungsmethoden der Filtermaterialien und -komponenten aufgeführt:

| | |
|---|---|
| Flächengewicht | EN ISO 536 (g/m$^2$) |
| Dicke | EN ISO 534, Tastendruck: 20 kPa (mm) |
| Luftdurchlässigkeit | EN ISO 9237 (l/m$^2\times$s) |
| | Die Luftdurchlässigkeit der Nanofaservliese wurde nach der folgenden Formel berechnet, da diese Vliese als Einzellage für die Meßmethode keine ausreichende mechanische Festigkeit aufwiesen. |

$$1/LD_{NFV} = 1/LD_V - 1/LD_T$$

In dieser Formel steht LD für die Luftdurchlässigkeit, NFV für das Nanofaservlies, V für den zweilagigen Verbund aus Nanofaservlies und Stützelement oder Nanofaservlies und Trägermateriallage und T für den Träger in diesem zweilagigen Verbund, als entweder das Stützelement oder die Trägermateriallage.

| Bruchwiderstand | EN ISO 1924-2 (N/15 mm Streifenbreite) |
| Faserdurchmesser | Licht- und rasterelektronische Mikroskopie; Vergleich der Faserdurchmesser mit eingespiegelter Meßskala |

Staubdurchlaßgrad und Filterwiderstände:

Palas, beschrieben in:

a) W. Willemer, W. Mölter, Praxisnahe Überprüfung von Staubfiltern, Chemietechnik 15 (1986), Heft 12, Seiten 20-26

b) W. Mölter, C. Helsper, Fast and Automated Testing of Filter Media, Filtech Conference, 23. Bis 25.09.1987, Utrecht/Holland

| Anströmgeschwindigkeit | 25 cm/Sekunde |
| Prüfluft | 200 mg Prüfstaub pro Kubikmeter |
| Prüfstaub | SAE fine, Partikelgrößenverteilung: 0-80 µm |
| Bestaubungszeit | 10 Minuten |
| Partikelzählung | Palas PCS 2000; Meßbereich 0,25 bis 10 µm |

Zur Bestimmung des Staubdurchlaßgrades ausgewertete Partikelfraktion: 0,25 bis 0,30 µm, Durchschnitt von 10 Minuten Bestaubung.

| Filterwiderstand ∆p1 | Filterwiderstand vor dem Bestauben |
| Filterwiderstand ∆p2 | Filterwiderstand nach dem Bestauben |
| | Dieser Wert ist der Maßstab für die Verstopfungsneigung und Standzeit des Filters, da davon unmittelbar die Saugleistung des Staubsaugers abhängig ist. |

Die folgenden Beispiele 1-3 zeigen die hervorragenden filtertechnischen Eigenschaften der erfindungsgemäßen Filterkombinationen im Vergleich zu herkömmlichen Filtermaterialien in Staubfilterbeuteln.

**Beispiel 1:**

Eine 7 %ige Lösung von Polyvinylalkohol mit einem mittleren Molekulargewicht von 200 000 und einem Verseifungsgrad von 98 % wurde durch eine Kapillare von 0,8 mm in einem Gleichspannungsfeld mit 30 kV Spannung zwischen Kapillare und geerdeter Gegenelektrode zu Nanofasern versponnen. Der Abstand zwischen Kapillare und Gegenelektrode betrug 6 cm. Das Nanofaservlies wurde auf einem Polypropylen-Meltblownmaterial, das auf der Gegenelektrode auflag, abgeschieden. Der mittlere Faserdurchmesser des Nanofaservlieses betrug ca. 380 nm, die berechnete Luftdurchlässigkeit 4200 l/m$^2$×s.

Für die Testung des Staubabscheidevermögens mit Hilfe der oben beschriebenen Prüfmethoden wurde die Meltblownlage, auf der das Nanofaservlies unter Bildung eines zweilagigen Verbundes abgeschieden war, so auf einer außenliegenden Trägermateriallage aus Filterpapier aufgebracht, daß die Nanofaserlage zwischen dem Träger und der Meltblownlage zu liegen kam.

Nachfolgende Tabelle faßt die Resultate der Testung zusammen.

| | | Filterpapierlage | Nanofaserlage | Meltblownlage | Kombination |
|---|---|---|---|---|---|
| Flächengewicht | g/m$^2$ | 45 | 0,1 | 23 | 68,1 |

(fortgesetzt)

|  |  | Filterpapierlage | Nanofaserlage | Meltblownlage | Kombination |
|---|---|---|---|---|---|
| Dicke | mm | 0,17 | | | |
| Bruchwiderstand längs | N | 40 | | | |
| Bruchwiderstand quer | N | 24 | | | |
| Luftdurchlässigkeit | l/ m$^2\times$s | 280 | 4200 | 750 | 195 |
| Staubdurchlaß (0,25-0,30 μm) | % | | | | 1,94 |
| Filterwiderstand $\Delta$p1 | Pa | | | | 305 |
| Filterwiderstand $\Delta$p2 | Pa | | | | 870 |

**Referenzbeispiel 1:**

Die Meltblownlage von Beispiel 1 wurde ohne darauf abgeschiedenes Nanofaservlies auf die Filterpapieraußenlage von Beispiel 1 aufgebracht und dieses Filtersystem mit den oben beschriebenen Prüfmethoden hinsichtlich seines Staubabscheidevermögens untersucht.

Nachfolgende Tabelle faßt die Resultate des Testung zusammen.

|  |  | Filterpapierlage | Meltblownlage | Kombination |
|---|---|---|---|---|
| Flächengewicht | g/m$^2$ | 45 | 23 | 68 |
| Dicke | mm | 0,17 | | |
| Bruchwiderstand längs | N | 40 | | |
| Bruchwiderstand quer | N | 24 | | |
| Luftdurchlässigkeit | l/ m$^2\times$s | 280 | 750 | 200 |
| Staubdurchlaß (0,25-0,30 μm) | % | | | 4,36 |
| Filterwiderstand $\Delta$p1 | Pa | | | 300 |
| Filterwiderstand $\Delta$p2 | Pa | | | 857 |

Beim Vergleich mit dem Referenzmaterial wird deutlich, daß durch eine Nanofaservliesauflage mit einem Flächengewicht von 0,1 g/m$^2$ der Staubdurchlaß für 0,25 bis 0,30 μm große Partikel von 4,36 auf 1,94 % reduziert wird ohne daß sich die Filterwiderstände signifikant verändern. Dies entspricht einer Reduzierung dieser feinen Staubpartikel um ca. 55 % in der filtrierten Luft.

**Beispiel 2**

Nach dem unter Beispiel 1 beschriebenen Verfahren wurde ein Nanofaservlies aus Polyvinylalkohol auf einem Polypropylen-Meltblownvlies abgeschieden. Der mittlere Faserdurchmesser des Nanofaservlieses betrug etwa 400 nm, die berechnete Luftdurchlässigkeit 7400 l/m$^2\times$s.

Für die Testung des Staubabscheidevermögens mit Hilfe der oben beschriebenen Prüfmethoden wurde die Meltblownlage, auf der das Nanofaservlies unter Bildung eines zweilagigen Verbundes abgeschieden war, so auf einer Spinnvlieslage auf Polypropylen aufgebracht, daß das Nanofaservlies die Anströmlage des Filtersystems bildete.

Nachfolgende Tabelle faßt die Resultate der Testung zusammen.

|  |  | Spinnvlieslage | Meltblown lage | Nanofaserlage | Kombination |
|---|---|---|---|---|---|
| Flächengewicht | g/m$^2$ | 30 | 36 | 0,1 | 66,1 |
| Dicke | mm | 0,25 | | | |
| Bruchwiderstand längs | N | 18 | | | |

(fortgesetzt)

| | | Spinnvlieslage | Meltblown lage | Nanofaserlage | Kombination |
|---|---|---|---|---|---|
| Bruchwiderstand quer | N | 7 | | | |
| Luftdurchlässigkeit | l/ m²×s | 3500 | 400 | 7400 | 345 |
| Staubdurch- % laß (0,25-0,30 μm) | | | | | 0,44 |
| Filterwiderstand Δp1 | Pa | | | | 135 |
| Filterwiderstand Δp2 | Pa | | | | 545 |

**Referenzbeispiel 2**

Die Meltblownlage von Beispiel 2 wurde ohne darauf abgeschiedenes Nanofaservlies auf die Spinnvliesaußenlage von Beispiel 2 aufgebracht und dieses Filtersystem mit den oben beschriebenen Prüfmethoden hinsichtlich seines Staubabscheidevermögens untersucht.

Nachfolgende Tabelle faßt die Resultate der Testung zusammen.

| | | Spinnvlieslage | Meltblownlage | Kombination |
|---|---|---|---|---|
| Flächengewicht | g/m² | 30 | 36 | 66 |
| Dicke | mm | 0,25 | 0,32 | |
| Bruchwiderstand längs | N | 18 | | |
| Bruchwiderstand quer | N | 7 | | |
| Luftdurchlässigkeit | l/ m²×s | 3500 | 400 | 355 |
| Staubdurch-laß (0,25-0,30 μm) | % | | | 2,66 |
| Filterwiderstand Δp1 | Pa | | | 125 |
| Filterwiderstand Δp2 | Pa | | | 540 |

Durch das Nanofaservlies des erfindungsgemäßen Staubbeutels in Beispiel 2 wurde bei praktisch gleichbleibenden Filterwiderständen der Durchlaß von Partikeln der Größe 0,25-0,30 μm von 2,66 auf 0,44 % reduziert. Dies entspricht einer Reduzierung der feinen Staubpartikel in der filtrierten Luft von ca. 83 %.

**Beispiel 3:**

Nach dem unter Beispiel 1 beschriebenen Verfahren wurde ein Nanofaservlies aus Polyvinylalkohol auf einem nach dem Naßlegeverfahren hergestellten Stützelement aus Zellstoffen abgeschieden. Der mittlere Faserdurchmesser des Nanofaservlieses betrug ca. 420 nm, die berechnete Luftdurchlässigkeit 2800 l/m²×s.

Für die Testung des Staubabscheidevermögens mit Hilfe der oben beschriebenen Prüfmethoden wurde das Stützelement, auf der das Nanofaservlies unter Bildung eines zweilagigen Verbundes abgeschieden war, so auf einer Filterpapieraußenlage aufgebracht, daß das Nanofaservlies zwischen dem außenliegenden Träger und dem Stützelement zu liegen kam.

Nachfolgende Tabelle faßt die Resultate der Testung zusammen.

| | | Papierträger | Nanofaservlies | Stützelement | Kombination |
|---|---|---|---|---|---|
| Flächengewicht | g/m² | 45 | 0,3 | 18 | 63,3 |
| Dicke | mm | 0,17 | | | |
| Bruchwiderstand längs | N | 40 | | | |
| Bruchwiderstand quer | N | 24 | | | |

(fortgesetzt)

| | | Papierträger | Nanofaservlies | Stützelement | Kombination |
|---|---|---|---|---|---|
| Luftdurchlässigkeit | l/m²xs | 280 | 2800 | 1500 | 210 |
| Staubdurchlaß (0,25-0,30 μm) | % | | | | 8,95 |
| Filterwiderstand $\Delta$p1 | Pa | | | | 230 |
| Filterwiderstand $\Delta$p2 | Pa | | | | 1425 |

**Referenzbeispiel 3**

Die Stützelementlage von Beispiel 3 wurde ohne darauf abgeschiedenes Nanofaservlies auf die außenliegende Filterpapierlage von Beispiel 3 aufgebracht und dieses Filtersystem mit den oben beschriebenen Prüfmethoden hinsichtlich seines Staubabscheidevermögens untersucht.

Nachfolgende Tabelle faßt die Resultate des Testung zusammen.

| | | Papierträger | Stützelement | Kombination |
|---|---|---|---|---|
| Flächengewicht | g/m² | 45 | 18 | 63 |
| Dicke | mm | 0,17 | | |
| Bruchwiderstand längs | N | 40 | | |
| Bruchwiderstand quer | N | 24 | | |
| Luftdurchlässigkeit | l/ m²$\times$s | 280 | 1500 | 235 |
| Staubdurchlaß (0,25-0,30 μm) | % | | | 27,89 |
| Filterwiderstand $\Delta$p1 | Pa | | | 200 |
| Filterwiderstand $\Delta$p2 | Pa | | | 1420 |

Durch das auf den Papierträger aufgebrachte Nanofaservlies wurde der Staubdurchlaß für 0,25 bis 0,30 μm große Partikel von 27,89 auf 8,95 % reduziert. Dies entspricht einer Reduzierung von etwa 68 %. Das aufgebrachte Nanofaservlies erhöhte den Filterwiderstand des unbestaubten Filters ($\Delta$p1) nur geringfügig, während der Filterwiderstand des bestaubten Filters ($\Delta$p2) praktisch unverändert war.

Die vorangehenden Beispiele zeigen, daß die Verwendung von spezifischen Nanofaservliesen in Staubfilterbeuteln bewirkt, daß Feinstpartikel im Größenbereich von 0,25 bis 0,3 μm effizient zurückgehalten werden, ohne dabei den Filterwiderstand $\Delta$p2 zu erhöhen. Die Saugleistung des Staubsaugers bleibt trotz der deutlichen Abscheidegradverbesserung im Vergleich zu den Referenzbeispielen praktisch unverändert.

**Patentansprüche**

1.   Staubfilterbeutel, umfassend mindestens eine Trägermateriallage und mindestens eine Faservlieslage, **dadurch gekennzeichnet daß** die mindestens eine Faservlieslage eine Nanofaservlieslage mit einem durchschnittlichen Faserdurchmesser von 10 bis 1000nm, einem Flächengewicht nach ISO 536 von 0,05 bis 2 g/m² und einer Luftdurchlässigkeit nach ISO 9237 von 1500 bis 20 000 l/m²$\times$s ist, und die mindestens eine Trägermateriallage eine Luftdurchlässigkeit nach ISO 9237 von mehr als 70 l/m²$\times$s, einen Bruchwiderstand nach ISO 1924-2 in Längsrichtung von mehr als 20 N/15 mm Streifenbreite und in Querrichtung von mehr als 10 N/15 mm Streifenbreite aufweist.

2.   Staubfilterbeutel nach Anspruch 1, **dadurch gekennzeichnet, daß** die Nanofaservlieslage direkt auf der Trägermateriallage unter Bildung eines zweilagigen Verbundes abgeschieden ist.

3.   Staubfilterbeutel nach Anspruch 1 oder 2, **dadurch gekennzeichnet, daß** zusätzlich ein Stützelement enthalten ist, auf dem die Nanofaservlieslage unter Bildung eines zweilagigen Verbundes abgeschieden ist.

**4.** Staubfilterbeutel nach einem oder mehreren der vorhergehenden Ansprüche, **dadurch gekennzeichnet, daß** die Trägermateriallage aus einem Spinnvlies besteht.

**5.** Staubfilterbeutel nach Anspruch 4, **dadurch gekennzeichnet, daß** das Spinnvlies ein Flächengewicht nach ISO 536 von 15 bis 100 g/m$^2$ hat.

**6.** Staubfilterbeutel nach Anspruch 4 oder 5, **dadurch gekennzeichnet, daß** das Spinnvlies eine Luftdurchlässigkeit nach ISO 9237 von 100 bis 8000 l/m$^2$xs besitzt.

**7.** Staubfilterbeutel nach einem oder mehreren der Ansprüche 1 bis 3, **dadurch gekennzeichnet, daß** die Trägermateriallage aus Filterpapier besteht.

**8.** Staubfilterbeutel nach Anspruch 7, **dadurch gekennzeichnet, daß** das Filterpapier ein Flächengewicht nach ISO 536 von 40 bis 90 g/m$^2$ hat.

**9.** Staubfilterbeutel nach Anspruch 7 oder 8, **dadurch gekennzeichnet, daß** das Filterpapier eine Luftdurchlässigkeit nach ISO 9237 von 70 bis 900 l/m$^2$xs besitzt.

**10.** Staubfilterbeutel nach einem oder mehreren der Ansprüche 7 bis 9, **dadurch gekennzeichnet, daß** das Filterpapier einen Bruchwiderstand nach ISO 1924-2 in Längsrichtung von 25 bis 70 N/15 mm Streifenbreite und in Querrichtung von 15 bis 45 N/15 mm Streifenbreite besitzt.

**11.** Staubfilterbeutel nach einem oder mehreren der Ansprüche 3 bis 10, **dadurch gekennzeichnet, daß** das Stützelement aus einem Vlies besteht.

**12.** Staubfilterbeutel nach Anspruch 11, **dadurch gekennzeichnet, daß** das Vlies ein trockengelegtes Vlies, ein naßgelegtes Vlies, ein Spinnvlies oder ein Meltblownvlies ist.

**13.** Staubfilterbeutel nach Anspruch 12, **dadurch gekennzeichnet, daß** das Vlies ein trockengelegtes Vlies mit einem Flächengewicht nach ISO 536 von 10 bis 50 g/m$^2$, einer Dicke nach ISO 534 von 0,10 bis 2,0 mm, einer Luftdurchlässigkeit nach ISO 9237 von 700 bis 12000 l/m$^2 \times$s und einem Bruchwiderstand nach ISO 1924-2 in Längsrichtung von mehr als 5 N/15 mm Streifenbreite und in Querrichtung von mehr als 2 N/15 mm Streifenbreite ist.

**14.** Staubfilterbeutel nach Anspruch 12, **dadurch gekennzeichnet, daß** das Vlies ein naßgelegtes Vlies mit einem Flächengewicht nach ISO 536 von 6 bis 40/m$^2$, einer Dicke nach ISO 534 von 0,05 bis 0,35 mm, einer Luftdurchlässigkeit nach ISO 9237 von 500 bis 4000 l/m$^2 \times$s und einem Bruchwiderstand nach ISO 1924-2 in Längsrichtung von mehr als 5 N/15 mm Streifenbreite und in Querrichtung von mehr als 2 N/15 mm Streifenbreite ist.

**15.** Staubfilterbeutel nach Anspruch 12, **dadurch gekennzeichnet, daß** das Vlies ein Spinnvlies mit einem Flächengewicht nach ISO 536 von 8 bis 40 g/m$^2$, einer Dicke nach ISO 534 von 0,05 bis 0,30 mm, einer Luftdurchlässigkeit nach ISO 9237 von 700 bis 12.000 l/m$^2 \times$s und einem Bruchwiderstand nach ISO 1924-2 in Längsrichtung von mehr als 7 N/15 mm Streifenbreite und in Querrichtung von mehr als 3 N/15 mm Streifenbreite ist.

**16.** Staubfilterbeutel nach Anspruch 12, **dadurch gekennzeichnet, daß** das Vlies ein Meltblownvlies mit einem Flächengewicht nach ISO 536 von 6 bis 60 g/m$^2$, einer Dicke nach ISO 534 von 0,06 bis 0,50 mm, einer Luftdurchlässigkeit nach ISO 9237 von 300 bis 2000 l/m$^2 \times$s und einem Bruchwiderstand nach ISO 1924-2 in Längsrichtung von mehr als 2 N/15 mm Streifenbreite und in Querrichtung von mehr als 1 N/15 mm Streifenbreite ist.

**17.** Staubfilterbeutel nach einem oder mehreren der Ansprüche 3 bis 16, **dadurch gekennzeichnet, daß** die Trägermateriallage die Außenseite und das Stützelement die innenliegende Anströmseite des Staubfilterbeutels bildet, wobei die Nanofaservlieslage im zweilagigen Verbund mit dem Stützelement der Trägermateriallage zugewandt ist.

**18.** Staubfilterbeutel nach einem oder mehreren der Ansprüche 3 bis 16, **dadurch gekennzeichnet, daß** die Trägermateriallage die Außenseite und das Stützelement die innenliegende Anströmseite des Staubfilterbeutels bildet, wobei die Nanofaservlieslage im zweilagigen Verbund mit dem Stützelement der Trägermateriallage abgewandt ist.

**19.** Staubfilterbeutel nach einem oder mehreren der Ansprüche 3 bis 16, **dadurch gekennzeichnet, daß** die Trägermateriallage die Außenseite und das Stützelement die innenliegende Anströmseite des Staubfilterbeutels bildet, wobei sowohl auf der Trägermateriallage als auch auf dem Stützelement jeweils eine Lage Nanofaservlies unter Bildung eines zweilagigen Verbundes abgeschieden ist.

20. Staubfilterbeutel nach Anspruch 19, **dadurch gekennzeichnet, daß** die auf dem Stützelement abgeschiedene Nanofaservlieslage der Trägermateriallage abgewandt ist und die auf der Trägermateriallage abgeschiedene Nanofaservlieslage dem Stützelement zugewandt ist.

21. Staubfilterbeutel nach Anspruch 19, **dadurch gekennzeichnet, daß** die auf dem Stützelement abgeschiedene Nanofaservlieslage der Trägermateriallage abgewandt ist und die auf der Trägermateriallage abgeschiedene Nanofaservlieslage dem Stützelement abgewandt ist.

22. Staubfilterbeutel nach Anspruch 19, **dadurch gekennzeichnet, daß** die auf dem Stützelement abgeschiedene Nanofaservlieslage der Trägermateriallage zugewandt ist und die auf der Trägermateriallage abgeschiedene Nanofaservlieslage dem Stützelement zugewandt ist.

23. Staubfilterbeutel nach Anspruch 19, **dadurch gekennzeichnet, daß** die auf dem Stützelement abgeschiedene Nanofaservlieslage der Trägermateriallage zugewandt ist und die auf der Trägermateriallage abgeschiedene Nanofaservlieslage dem Stützelement abgewandt ist.

24. Staubfilterbeutel nach einem oder mehreren der Ansprüche 3 bis 16, **dadurch gekennzeichnet, daß** die Trägermateriallage die Außenseite und das Stützelement die innenliegende Anströmseite des Staubfilterbeutels bilden, wobei sowohl auf beiden Seiten der Trägermateriallage als auch auf beiden Seiten des Stützelements jeweils eine Lage Nanofaservlies unter jeweiliger Bildung eines dreilagigen Verbundes abgeschieden ist.

25. Staubfilterbeutel nach einem oder mehreren der vorhergehenden Ansprüche, **dadurch gekennzeichnet, daß** sämtliche Lagen aus wasserunlöslichen Materialien bestehen.

## Claims

1. Dust filter bag comprising at least one support material layer and at least one fibrous nonwoven layer, **characterised in that** the at least one fibrous nonwoven layer is a nano-fibre nonwoven layer having an average fibre diameter of 10 to 1,000 nm, a weight per unit area according to ISO 536 of 0.05 to 2 g/m$^2$ and an air permeability according to ISO 9237 of 1,500 to 20,000 l/m$^2$ x s, and the at least one support material layer has an air permeability according to ISO 9237 of more than 70 l/m$^2$ x s, a tensile strength according to ISO 1924-2 in longitudinal direction of more than 20 N/15 mm strip width and in transverse direction of more than 10 N/15 mm strip width.

2. Dust filter bag according to claim 1, **characterised in that** the nano-fibre nonwoven layer is deposited directly on the support material layer with formation of a double-layer composite.

3. Dust filter bag according to claim 1 or 2, **characterised in that** a supporting element is additionally present, on which the nano-fibre nonwoven layer is deposited with formation of a double-layer composite.

4. Dust filter bag according to one or more of the preceding claims, **characterised in that** the support material layer consists of a spun-bonded nonwoven.

5. Dust filter bag according to claim 4, **characterised in that** the spun-bonded nonwoven has a weight per unit area according to ISO 536 of 15 to 100 g/m$^2$.

6. Dust filter bag according to claim 4 or 5, **characterised in that** the spun-bonded nonwoven has an air permeability according to ISO 9237 of 100 to 8,000 l/m$^2$ x s.

7. Dust filter bag according to one or more of claims 1 to 3, **characterised in that** the support material layer consists of filter paper.

8. Dust filter bag according to claim 7, **characterised in that** the filter paper has a weight per unit area according to ISO 536 of 40 to 90 g/m$^2$.

9. Dust filter bag according to claim 7 or 8, **characterised in that** the filter paper has an air permeability according to ISO 9237 of 70 to 900 l/m$^2$ x s.

10. Dust filter bag according to one or more of claims 7 to 9, **characterised in that** the filter paper has a tensile strength according to ISO 1924-2 in longitudinal direction of 25 to 70 N/15 mm strip width and in transverse direction of 15 to 45 N/15 mm strip width.

11. Dust filter bag according to one or more of claims 3 to 10, **characterised in that** the supporting element consists of a nonwoven.

12. Dust filter bag according to claim 11, **characterised in that** the nonwoven is a dry-laid nonwoven, a wet-laid nonwoven, a spun-bonded nonwoven or a melt-blown nonwoven.

13. Dust filter bag according to claim 12, **characterised in that** the nonwoven is a dry-laid nonwoven having a weight per unit area according to ISO 536 of 10 to 50 g/m$^2$, a thickness according to ISO 534 of 0.10 to 2.0 mm, an air permeability according to ISO 9237 of 700 to 12,000 l/m$^2$ x s and a tensile strength according to ISO 1924-2 in longitudinal direction of more than 5 N/15 mm strip width and in transverse direction of more than 2 N/15 mm strip width.

14. Dust filter bag according to claim 12, **characterised in that** the nonwoven is a wet-laid nonwoven having a weight per unit area according to ISO 536 of 6 to 40 /m$^2$, a thickness according to ISO 534 of 0.05 to 0.35 mm, an air permeability according to ISO 9237 of 500 to 4,000 l/m$^2$ x s and a tensile strength according to ISO 1924-2 in longitudinal direction of more than 5 N/15 mm strip width and in transverse direction of more than 2 N/15 mm strip width.

15. Dust filter bag according to claim 12, **characterised in that** the nonwoven is a spun-bonded nonwoven having a weight per unit area according to ISO 536 of 8 to 40 g/m$^2$, a thickness according to ISO 534 of 0.05 to 0.30 mm, an air permeability according to ISO 9237 of 700 to 12,000 l/m$^2$ x s and a tensile strength according to ISO 1924-2 in longitudinal direction of more than 7 N/15 mm strip width and in transverse direction of more than 3 N/15 mm strip width.

16. Dust filter bag according to claim 12, **characterised in that** the nonwoven is a melt-blown nonwoven having a weight per unit area according to ISO 536 of 6 to 60 g/m$^2$, a thickness according to ISO 534 of 0.06 to 0.50 mm, an air permeability according to ISO 9237 of 300 to 2,000 l/m$^2$ x s and a tensile strength according to ISO 1924-2 in longitudinal direction of more than 2 N/15 mm strip width and in transverse direction of more than 1 N/15 mm strip width.

17. Dust filter bag according to one or more of claims 3 to 16, **characterised in that** the support material layer forms the outer side and the supporting element forms the inner-lying incident flow side of the dust filter bag, wherein the nano-fibre nonwoven layer in the double-layer composite with the supporting element is facing the support material layer.

18. Dust filter bag according to one or more of claims 3 to 16, **characterised in that** the support material layer forms the outer side and the supporting element forms the inner-lying incident flow side of the dust filter bag, wherein the nano-fibre nonwoven layer in the double-layer composite with the supporting element is facing away from the support material layer.

19. Dust filter bag according to one or more of claims 3 to 16, **characterised in that** the support material layer forms the outer side and the supporting element forms the inner-lying incident flow side of the dust filter bag, wherein in each case a layer of nano-fibre nonwoven is deposited both on the support material layer and on the supporting element with formation of a double-layer composite.

20. Dust filter bag according to claim 19, **characterised in that** the nano-fibre nonwoven layer deposited on the supporting element is facing away from the support material layer and the nano-fibre nonwoven layer deposited on the support material layer is facing the supporting element.

21. Dust filter bag according to claim 19, **characterised in that** the nano-fibre nonwoven layer deposited on the supporting element is facing away from the support material layer and the nano-fibre nonwoven layer deposited on the support material layer is facing away from the supporting element.

22. Dust filter bag according to claim 19, **characterised in that** the nano-fibre nonwoven layer deposited on the supporting element is facing the support material layer and the nano-fibre nonwoven layer deposited on the support material layer is facing the supporting element.

23. Dust filter bag according to claim 19, **characterised in that** the nano-fibre nonwoven layer deposited on the supporting element is facing the support material layer and the nano-fibre nonwoven layer deposited on the support material layer is facing away from the supporting element.

24. Dust filter bag according to one or more of claims 3 to 16, **characterised in that** the support material layer forms the outer side and the supporting element forms the inner-lying incident flow side of the dust filter bag, wherein in each case a layer of nano-fibre nonwoven is deposited both on both sides of the support material layer and on both sides of the supporting element with particular formation of a triple-layer composite.

25. Dust filter bag according to one or more of the preceding claims, **characterised in that** all layers consist of water-insoluble materials.

**Revendications**

1. Sac filtrant à poussière, comprenant au moins une couche de matériau support et au moins une couche de matelas de fibres, **caractérisé en ce que** la au moins une couche de matelas de fibres est une couche de matelas de nanofibres, d'un diamètre de fibres moyen de 10 à 1000 nm, d'un poids surfacique, selon ISO 536, de 0,05 à 2 g/$m^2$ et d'une perméabilité à l'air, selon ISO 9237, de 1500 à 20.000 l/$m^2$ x s, et la au moins une couche de matériau support ayant une perméabilité à l'air, selon ISO 9237, supérieure à 70 l/$m^2$ x s, une résistance à la rupture, selon ISO 1924-2, en direction longitudinale, supérieure à 20 N/15 mm de largeur de bande et, en direction transversale, supérieure à 10 N/15 mm de largeur de bande.

2. Sac filtrant à poussière selon la revendication 1, **caractérisé en ce que** la couche de matelas en nanofibres est déposée directement sur la couche de matériau support en formant un composite à deux couches.

3. sac filtrant à poussière selon la revendication 1 ou 2, **caractérisé en ce que**, en plus, est contenu un élément de soutien, sur lequel la couche de matelas de nanofibres est déposée en formant un composite à deux couches.

4. Sac filtrant à poussière selon l'une ou plusieurs des revendications précédentes, **caractérisé en ce que** la couche de matériau support est formée d'un matelas non tissé par filature directe ou voie fondue.

5. Sac filtrant à poussière selon la revendication 4, **caractérisé en ce que** le matelas non tissé par filature directe ou voie fondue présente un poids surfacique, selon ISO 536, de 15 à 100 g/$m^2$.

6. Sac filtrant à poussière selon la revendication 4 ou 5, **caractérisé en ce que** le matelas non tissé par filature directe ou voie fondue présente une perméabilité à l'air, selon ISO 9237, de 100 à 8.000 l/$m^2$ x s.

7. Sac filtrant à poussière selon l'une ou plusieurs des revendications 1 à 3, **caractérisé en ce que** la couche de matériau support est formée d'un papier filtrant.

8. Sac filtrant à poussière selon la revendication 7, **caractérisé en ce que** le papier filtrant présente un poids surfacique, selon ISO 536, de 40 à 90 g/$m^2$.

9. Sac filtrant à poussière selon la revendication 7 ou 8, **caractérisé en ce que** le papier filtrant présente une perméabilité à l'air, selon ISO 9237, de 70 à 900 l/$m^2$ x s.

10. Sac filtrant à poussière selon l'une ou plusieurs des revendications 7 à 9, **caractérisé en ce que** le papier filtrant présente une résistance à la rupture, selon ISO 1924-2, en direction longitudinale, de 25 à 70 N/15 mm de largeur de bande et, en direction transversale, de 15 à 45 N/15 mm de largeur de bande.

11. Sac filtrant à poussière selon l'une ou plusieurs des revendications 3 à 10, **caractérisé en ce que** l'élément de soutien est formé d'un matelas non tissé.

12. Sac filtrant à poussière selon la revendication 11, **caractérisé en ce que** le matelas non tissé est un matelas posé à l'état sec, un matelas posé à l'état humide, un matelas non tissé par filature directe ou voie fondue, ou un matelas de type meltblown.

13. Sac filtrant à poussière selon la revendication 12, **caractérisé en ce que** le matelas est un matelas posé à sec, d'un poids surfacique, selon ISO 536, de 10 à 50 g/m$^2$, d'une épaisseur, selon ISO 534, de 0,10 à 2,0 mm, d'une perméabilité à l'air, selon ISO 9237, de 700 à 12000 l/m$^2$ x s et d'une résistance à la rupture, selon ISO 1924-2, en direction longitudinale, supérieure à 5 N/15 mm de largeur de bande et, en direction transversale, supérieure à 2 N/15 mm de largeur de bande.

14. Sac filtrant à poussière selon la revendication 12, **caractérisé en ce que** le matelas est un matelas posé à l'état humide, d'un poids surfacique, selon ISO 536, de 6 à 40 g/m$^2$, d'une épaisseur, selon ISO 534, de 0,05 à 0,35 mm, d'une perméabilité à l'air, selon ISO 9237, de 500 à 4000 l/m$^2$ x s et d'une résistance à la rupture, selon ISO 1924-2, en direction longitudinale, supérieure à 5 N/15 mm de largeur de bande et, en direction transversale, supérieure à 2 N/15 mm de largeur de bande.

15. Sac filtrant à poussière selon la revendication 12, **caractérisé en ce que** le matelas est un matelas non tissé par filature directe ou voie fondue, d'un poids surfacique, selon ISO 536, de 8 à 40 g/m$^2$, d'une épaisseur, selon ISO 534, de 0,05 à 0,30 mm, d'une perméabilité à l'air, selon ISO 9237, de 700 à 12.000 l/m$^2$ x s et d'une résistance à la rupture, selon ISO 1924-2, en direction longitudinale, supérieure à 7 N/15 mm de largeur de bande et, en direction transversale, supérieure à 3 N/15 mm de largeur de bande.

16. Sac filtrant à poussière selon la revendication 12, **caractérisé en ce que** le matelas est un matelas meltblown, d'un poids surfacique, selon ISO 536, de 6 à 60 g/m$^2$, d'une épaisseur, selon ISO 534, de 0,06 à 0,50 mm, d'une perméabilité à l'air, selon ISO 9237, de 300 à 2000 l/m$^2$ x s et d'une résistance à la rupture, selon ISO 1924-2, en direction longitudinale, supérieure à 2 N/15 mm de largeur de bande et, en direction transversale, supérieure à 1 N/15 mm de largeur de bande.

17. Sac filtrant à poussière selon l'une ou plusieurs des revendications 3 à 16, **caractérisé en ce que** la couche de matériau support forme la face extérieure, et l'élément de soutien forme la face d'arrivée d'écoulement intérieure du sac filtrant à poussière, la couche en matelas à nanofibres, dans le composite à deux couches, avec l'élément de soutien, étant tournée vers la couche de matériau support.

18. Sac filtrant à poussière selon l'une ou plusieurs des revendications 3 à 16, **caractérisé en ce que** la couche de matériau support forme la face extérieure, et l'élément de soutien forme la face d'arrivée d'écoulement intérieure du sac filtrant à poussière, la couche de matelas à nanofibres, dans le composite à deux couches, avec l'élément de soutien, étant opposée à la couche de matériau support.

19. Sac filtrant à poussière selon l'une ou plusieurs des revendications 3 à 16, **caractérisé en ce que** la couche de matériau support forme la face extérieure, et l'élément de soutien forme la face d'arrivée d'écoulement intérieure du sac filtrant a poussière, sachant que, tant sur la couche de matériau support, qu'également sur l'élément de soutien, est chaque fois disposée une couche de matelas à nanofibres, en formant un composite à deux couches.

20. Sac filtrant à poussière selon la revendication 19, **caractérisé en ce que** la couche de matelas en nanofibres, déposée sur l'élément de soutien, est opposée à la couche de matériau support, et la couche de matelas en nanofibres, déposée sur la couche de matériau support, est tournée vers l'élément de soutien.

21. Sac filtrant à poussière selon la revendication 19, **caractérisé en ce que** la couche de matelas en nanofibres, déposée sur l'élément de soutien, est opposée à la couche de matériau support, et la couche de matelas en nanofibres, déposée sur la couche de matériau support, est opposée à l'élément de soutien.

22. Sac filtrant à poussière selon la revendication 19, **caractérisé en ce que** la couche de matelas en nanofibres, déposée sur l'élément de soutien, est tournée vers la couche de matériau support, et la couche de matelas en nanofibres, déposée sur la couche de matériau support, est tournée vers l'élément de soutien.

23. Sac filtrant à poussière selon la revendication 19, **caractérisé en ce que** la couche de matelas en nanofibres, déposée sur l'élément de soutien, est tournée vers la couche de matériau support, et la couche de matelas en nanofibres, déposée sur la couche de matériau support, est opposée à l'élément de soutien.

24. Sac filtrant à poussière selon l'une ou plusieurs des revendications 3 à 16, **caractérisé en ce que** la couche de matériau support forme la face extérieure, et l'élément de soutien forme la face d'arrivée d'écoulement côté intérieur du sac filtrant à poussière, sachant que tant sur les deux faces de la couche de matériau support qu'également sur les deux faces de l'élément de soutien, est chaque fois déposée une couche de matelas en nanofibres, en formant respectivement un composite à trois couches.

25. Sac filtrant à poussière selon l'une ou plusieurs des revendications précédentes, **caractérisé en ce que** l'ensemble des couches sont formées de matériaux insolubles dans l'eau.